# FASCICULE DE BREVET EUROPEEN

(11) **EP 3 074 934 B1**
(45) Date de publication et mention de la délivrance du brevet: **25.12.2024**
(21) Numéro de dépôt: 14814952.9
(22) Date de dépôt: 25.11.2014
(51) Int. Cl.: G06Q 10/08

(54) **METHODE D'ESTIMATION D'UNE CARACTERISTIQUE D'UN CHARGEMENT DE GAZ NATUREL LIQUEFIE**
VERFAHREN ZUR SCHÄTZUNG EINER EIGENSCHAFT EINER FLÜSSIGERDGASLADUNG
METHOD FOR ESTIMATING A CHARACTERISTIC OF A LIQUEFIED NATURAL GAS LOAD

(30) Priorité: 26.11.2013 FR 1361652
(43) Date de publication de la demande: 05.10.2016
(73) Titulaire: GAZTRANSPORT ET TECHNIGAZ, 78470 Saint-Rémy-lès-Chevreuse (FR)
(72) Inventeur: LEGRAND, Frédéric, F-75017 Paris (FR); PORTANNIER, Benoit, F-75017 Paris (FR); ZELLOUF, Yacine, F-92600 Asnieres sur Seine (FR); BENOIT, Laurent, F-75018 Paris (FR)
(74) Mandataire: Cabinet Beau de Loménie
(86) Numéro de dépôt international: PCT/FR2014/053034
(87) Numéro de publication internationale: WO 2015/079162

(56) Documents cités:
- WO-A1-2010/059307
- WO-A1-2013/085692
- M. M. FARUQUE HASAN ET AL: "Minimizing Boil-Off Losses in Liquefied Natural Gas Transportation", INDUSTRIAL & ENGINEERING CHEMISTRY RESEARCH, vol. 48, no. 21, 4 November 2009 (2009-11-04), pages 9571 - 9580, XP055452352, ISSN: 0888-5885, DOI: 10.1021/ie801975q

## Description

### Contexte technique

L'invention s'inscrit dans le domaine du transport d'un chargement susceptible de subir une transformation au cours du transport en fonction des conditions rencontrées pendant le transport, cette transformation pouvant affecter le prix de vente du chargement.

L'invention trouve une application particulière dans le transport du gaz liquéfié, en général du gaz naturel liquéfié (GNL), par voie maritime. Les navires utilisés sont des méthaniers disposant de cuves pour le gaz liquéfié. Au cours du transport, une partie du gaz liquéfié repasse à l'état gazeux, la fraction gazeuse étant appelée BOG, pour « Boil Off Gas », c'est-à-dire, en anglais, gaz évaporé. Cette fraction dépend de nombreux paramètres et facteurs, dont la géométrie et l'isolation des cuves, mais aussi le niveau d'agitation de celles-ci, qui dépend de l'état de la mer au cours du trajet, de la vitesse du navire. La fraction de BOG produite dépend aussi au final de la durée du voyage. Certains méthaniers sont équipés de dispositifs pour reliquéfier le BOG. D'autres l'utilisent pour la propulsion du navire, comme combustible. Il est aussi courant de bruler le BOG, en totalité ou en partie, pour s'en débarrasser dans un processus d'oxydation.

La transformation d'une partie du GNL en BOG a un impact, outre sur la quantité de GNL restante, aussi sur sa composition exacte, car certaines molécules s'évaporent plus vite que d'autres. La composition du GNL influe quant à elle sur son intérêt économique (ou sa qualité, vue par les acheteurs potentiels du chargement) et donc sur son prix rapporté au volume négocié.

Or les sociétés exploitant des méthaniers doivent répondre à des appels d'offre exigeants, basés sur le prix du marché à une date donnée, et incluant une contrainte sur la qualité du produit délivré. Ces appels d'offre sont couramment appelés dans le métier contrats « spot ».

Pour la société exploitant le méthanier, répondre à de tels appels d'offre implique actuellement une certaine prise de risque, car il est difficile d'anticiper la qualité et la quantité du GNL qui sera finalement livré. Les conditions de transport peuvent être partiellement anticipées, en fonction des conditions météorologiques attendues, et de la vitesse à laquelle il est envisagé de faire naviguer le navire. Mais actuellement, il n'est pas possible de prendre en compte ces informations pour déterminer la qualité et la quantité du GNL attendues à la fin du trajet. En effet, même si certains exploitants ont accès à un logiciel (le logiciel CARGO développé par le laboratoire CRIGEN) calculant la quantité et la qualité du GNL à la fin d'un trajet envisagé, sur la base de la qualité et de la quantité de GNL en début de trajet, ce logiciel effectue ce calcul en prenant en compte une évaporation du gaz supposée constante au cours du trajet.

Il en résulte un besoin non satisfait en matière de capacité à évaluer la faisabilité économique et à choisir la bonne voie maritime (itinéraire, vitesse), pour un exploitant de méthanier souhaitant répondre à un appel d'offre « spot ».

Corrélativement, il existe également un besoin non satisfait d'une solution efficace permettant d'améliorer l'estimation de la qualité et/ou de la quantité de GNL transporté par un navire en tous points de son trajet.

L'état de la technique le plus proche est représenté dans le document WO 2013/085692 qui décrit un procédé d'optimisation d'un planning de livraison de GNL.

### Définition de l'invention et avantages associés

Pour résoudre ce problème, il est proposé une méthode selon la revendication 1.

La méthode d'estimation d'une caractéristique d'un chargement de gaz naturel liquéfié transporté par un navire de transport est une méthode d'aide à l'exploitation du navire de transport comportant cette estimation. De façon avantageuse, l'étape d'estimation améliore l'évaluation des caractéristiques physiques du gaz naturel liquéfié transporté par le navire en prenant en compte la dynamique réelle d'évaporation de ce gaz.

Grâce à ces principes, il est possible d'obtenir une évaluation précise de la qualité (composition) et de la quantité d'un gaz liquéfié transporté, ce qui permet de mieux gérer l'exploitation du navire. Il est notamment possible de répondre très rapidement à des appels d'offre « spot », en obtenant une évaluation très précise de la rentabilité de l'opération, et en optimisant d'un point de vue économique les conditions de transport.

Dans un mode de réalisation, le point du trajet pour lequel l'estimation est effectuée est le point d'arrivée du navire à son terminal de livraison, ou alternativement un point du trajet auquel il est nécessaire de choisir entre deux itinéraires. Ainsi, on voit bien la grande souplesse d'utilisation et la flexibilité du procédé, qui s'applique à des navires disposant ou non de capteurs visant à connaître en temps réel la composition du GNL transporté et les caractéristiques du BOG produit.

Selon des variantes, le trajet comprend un trajet envisagé et la loi est utilisée à l'aide de valeurs prédites de la condition instantanée de navigation. Alternativement, le trajet comprend un trajet effectué et la loi est utilisée à l'aide de valeurs relevées pendant le trajet de la condition instantanée de navigation.

Par exemple, la condition instantanée de navigation comprend la vitesse du navire et les conditions météorologiques (l'état de la mer et de l'atmosphère sur le trajet). On prévoit aussi que le point de référence soit le terminal de chargement du navire.

La vitesse du navire et les conditions météorologiques sont des grandeurs physiques.

Selon les modes de réalisation, la caractéristique du gaz transporté comprend la composition du gaz liquéfié, la température du gaz liquéfié, la proportion ou la quantité de gaz évaporé depuis le chargement, une qualité du gaz liquéfié ou une quantité restante de gaz liquéfié. La loi fournit quantité et composition (qualité) du gaz évaporé. Dans un mode de réalisation complet, la loi prend en compte les caractéristiques des cuves du méthanier.

Dans un mode de réalisation particulier, on effectue des estimations pour une pluralité de destinations possibles, et on compare, pour ces destinations, des valeurs marchandes du gaz transporté calculées pour les destinations possibles respectives, pour sélectionner la destination la plus lucrative pour le chargement.

L'invention propose aussi un dispositif selon la revendication 11.

### Liste des figures

La figure 1 montre un méthanier et sa cargaison.
La figure 2 montre un schéma des étapes mises en oeuvre selon un mode de réalisation de l'invention.
La figure 3 montre le fonctionnement d'un outil selon un mode de réalisation de l'invention.
Les figures 4 et 5 montrent deux modes de réalisation de l'invention.

### Description détaillée

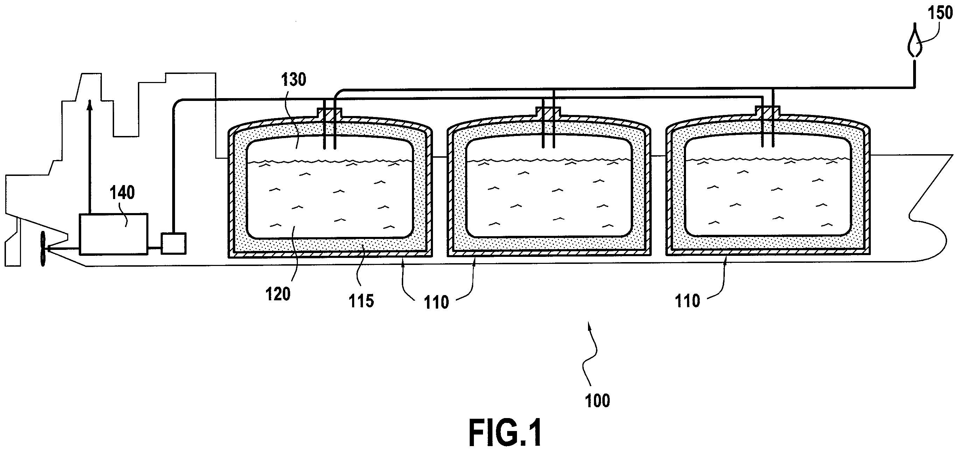

En relation avec la **figure 1****,** on a représenté un méthanier 100, comprenant plusieurs cuves 110 remplies de GNL 120. Malgré la présence d'une isolation 115, une partie du GNL s'évapore pour former du BOG 130, tout au long du parcours du navire. Le BOG 130 peut être utilisé comme combustible pour la propulsion du méthanier 100 via un moteur 140, mais peut aussi être simplement oxydé via une torchère 150.

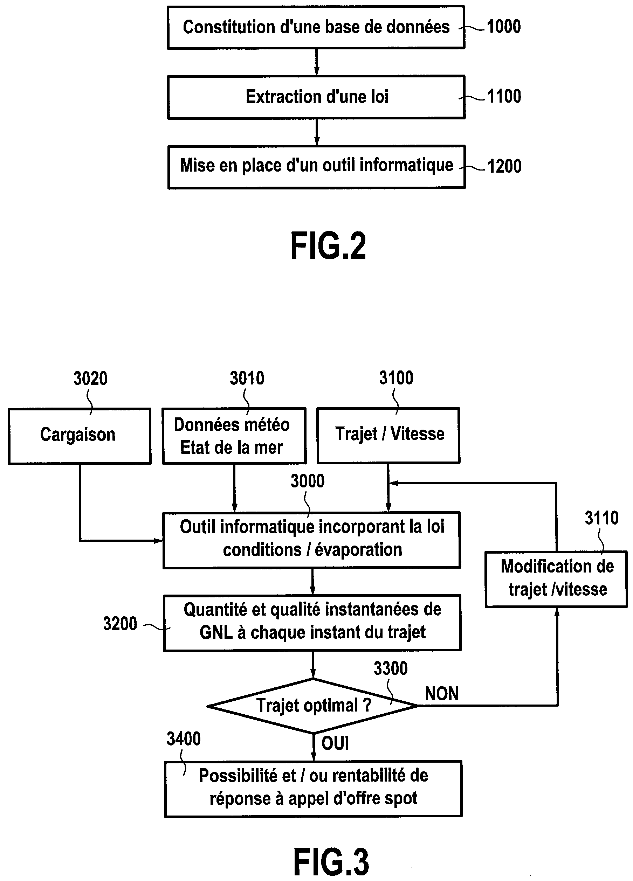

En **figure 2****,** on a présenté le processus mis en oeuvre dans un mode de réalisation de l'invention.

Tout d'abord, il est constitué une base de données d'expérience au cours d'une phase 1000. Cette phase peut utiliser une flotte de navires, ou un navire unique. Chaque navire va être équipé de différents capteurs et enregistreurs pour mesurer la quantité et la nature des différents composants du BOG au cours de trajet du navire. Ces capteurs peuvent inclure des chromatographes ou des analyseurs de pouvoir calorifique utilisant la combustion, pour connaître la composition de gaz évaporé. Les capteurs comprennent de plus des outils de mesure du débit d'évaporation, mesurant par exemple le débit d'aspiration des compresseurs de BOG à chaque instant. Les capteurs peuvent aussi inclure des outils de mesure de l'état de la mer telle une centrale inertielle, mesurant la hauteur des vagues ou leur période, ainsi que la direction des vagues et la vitesse du navire. Un système laser peut être utilisé pour mesurer la hauteur des vagues. Des données satellitaires peuvent aussi être exploitées, sur la base des coordonnées GPS. Les capteurs peuvent aussi mesurer la température de la mer ou le vent.

Les différents capteurs et enregistreurs sont réunis sur un même navire et relèvent à chaque instant (typiquement toutes les minutes, mais d'autres fréquences peuvent être utilisées) les valeurs mesurées.

On constitue ainsi une base de données d'expérience, par exemple en recueillant toutes les valeurs pour un navire pendant un an, ou pour une flotte de navires pendant un laps de temps plus court.

Une fois la base de données constituée au cours de l'étape 1000, une loi reliant les conditions de navigation et la transformation du GNL en BOG est extraite, au cours d'une étape 1100. Il s'agit là, par une approche statistique de corrélation, par exemple par une corrélation polynomiale, de relier la quantité et la composition du GNL restant et du BOG aux paramètres que constituent l'état de la mer (hauteur et fréquence des vagues, vitesse du courant, température de la mer), les caractéristiques du méthanier (notamment sa capacité de stockage et son système d'isolation), la vitesse de navigation, les conditions météorologiques (incluant la vitesse du vent et la température extérieure), et la nature du GNL initialement embarqué.

Une fois la loi extraite, il est proposé de la mettre en place dans un outil informatique, au cours d'une étape 1200.

L'outil informatique permet par exemple à l'équipage d'un méthanier en cours de navigation de suivre l'évolution de la nature du gaz naturel liquéfié dans les cuves d'un méthanier en temps réel, tout au long du trajet.

L'outil permet de connaître des caractéristiques physiques du gaz naturel liquéfié à la fin de ce trajet.

L'outil permet également à l'exploitant, avant de décider de lancer un navire sur un trajet donné, d'optimiser ce trajet pour que celui-ci soit rentable. Ainsi, le calcul de rentabilité prendra en compte les conditions de navigation attendues, le prix attendu pour la livraison du chargement au port de destination, en fonction du prix proposé dans ce port et de l'état attendu de la cargaison à l'arrivée, ainsi que les coûts de transport, incluant les frais d'affrètement et le coût du personnel. Il est vérifié que les contraintes de durée du trajet et de sécurité spécifiques à la navigation maritime sont satisfaites.

L'outil permet également d'évaluer les possibilités d'utilisation d'un méthanier donné pour répondre à un appel d'offre « spot ». Ainsi, il est décidé, une fois un trajet optimisé déterminé, si ce trajet est rentable dans le cadre de l'exploitation économique du navire, ou s'il est préférable de réserver le navire pour un autre appel d'offre.

En **figure 3****,** on a représenté plus en détails ce processus.

L'outil informatique 3000 reçoit, en entrée, des données 3010 portant sur la situation météorologique prévue et l'état de la mer. Il reçoit aussi des informations 3020 portant sur la cargaison du navire. Des données initiales 3100 portant sur un trajet envisagé et une vitesse de navigation envisagée sur le trajet (constante ou variable au cours du trajet) sont également fournies à l'outil 3000.

L'outil 3000 fournit, sur la base de ces données, la qualité (ou composition) et la quantité instantanées de GNL à chaque instant du trajet, et/ou, par différence, la quantité et la composition du BOG produit à chaque instant du trajet. Ces données sont référencées 3200. Elles permettent, selon un critère de convergence, de décider s'il est souhaitable de rechercher des données de trajet et de vitesse permettant une amélioration des données 3200. Un test est effectué au cours d'une étape 3300. S'il est souhaitable de modifier le trajet ou la vitesse, des données de trajet et de vitesse modifiées, 3110, sont réintroduites dans l'outil 3000 qui procède à un nouveau calcul, toutes autres informations égales par ailleurs. S'il est estimé que le trajet obtenu est suffisamment optimisé, il est alors procédé à une étape d'étude de la possibilité ou de la rentabilité d'une réponse à un appel d'offres « spot », étape référencée 3400.

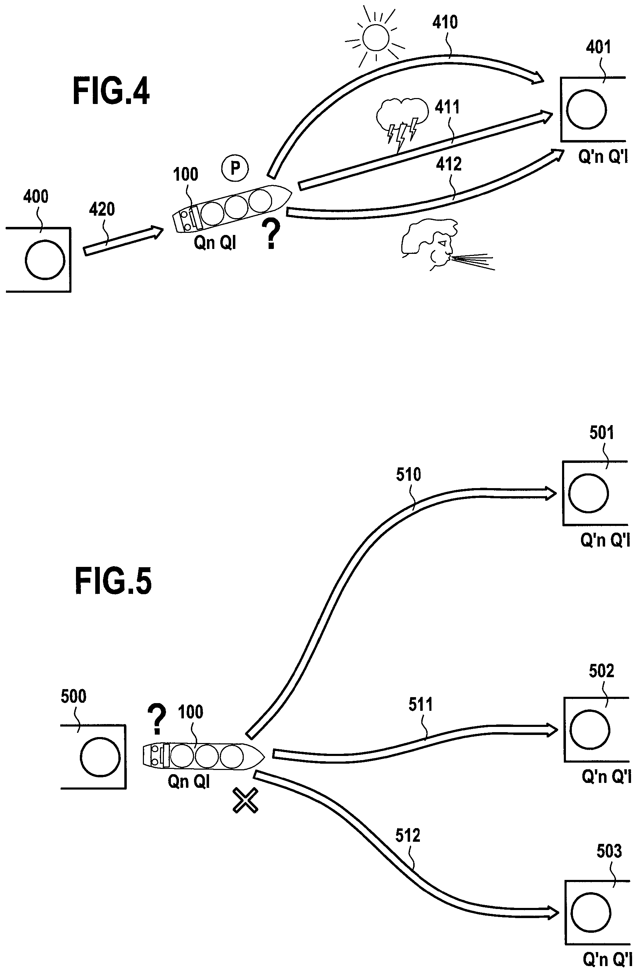

En référence à la **figure 4****,** un mode d'application de l'invention est présenté.

Un méthanier 100 ayant déjà effectué un trajet depuis un port de chargement 400, est actuellement en mer en un point P. Pour rejoindre un port 401, son équipage évalue trois routes maritimes 410, 411 et 412. Ces routes diffèrent par les conditions météorologiques attendues, les vitesses autorisées, et les distances autorisées. A l'aide de l'outil présenté plus haut, l'équipage est en mesure de choisir la route qui lui permettra de rejoindre le port 401 en conservant dans ses cuves un GNL de la meilleure qualité Qₗ, et/ou de la plus grande quantité Qₙ. On précise que sur la figure 4, les notations Qₙ et Qₗ désignent les valeurs au début du trajet analysé, et les notations Qₙ' et Qₗ' désignent les valeurs à la fin du trajet analysé. L'outil informatique est utilisé pour intégrer la loi reliant conditions de transport et transformation du gaz sur les trois trajets envisagés 410, 411 et 412 en utilisant des données de navigation prévues ou anticipées.

On précise de plus qu'il est possible, si les valeurs Qₙ et Qₗ ne sont pas connues au point P, parce que par exemple le navire n'est pas équipé de capteurs pour les mesurer, il est possible à l'aide de l'outil informatique proposé, de les estimer en intégrant la loi reliant conditions de transport et transformation du gaz sur le trajet déjà parcouru, référencé 420, en utilisant les conditions de transport effectives enregistrées au cours de la traversée entre le port 400 et le point P.

En référence à la **figure 5****,** un autre mode d'application de l'invention est présenté.

Un méthanier 100 est au port de chargement 500. Il est chargé, ou prêt à être chargé avec une cargaison de GNL. L'opérateur du navire s'interroge sur la destination à donner au navire et à sa cargaison. Les ports 501, 502 et 503 sont susceptibles d'acheter la cargaison, chacun à un prix différent, le prix final dans un port donné dépendant de plus de la qualité et de la quantité du GNL effectivement acheminé. L'outil informatique évoqué plus haut est utilisé pour intégrer la loi reliant conditions de transport et transformation du gaz sur les trois trajets envisagés 510, 511 et 512 en utilisant des données de navigation prévues ou anticipées. A l'aide de l'outil informatique l'opérateur du navire peut donc décider de diriger celui-ci vers l'un des ports 501, 502 ou 503, voire de garder le méthanier 100 à quai en attendant que d'autres offres apparaissent, si les offres des ports 501, 502 et 503 ne sont pas suffisamment attractives compte tenu des conditions de navigation.

L'invention n'est pas limitée aux modes de réalisation décrits, mais s'étend à toutes les variantes dans le cadre de la portée des revendications.

## Revendications

1. Méthode mise en oeuvre par ordinateur pour estimer des caractéristiques (Qn', Ql') d'un chargement de gaz naturel liquéfié transporté ou destiné à être transporté par un navire de transport, dans laquelle les caractéristiques comprennent une composition de gaz naturel liquéfié et une quantité de gaz naturel liquéfié, **caractérisée en ce que** la méthode comprend :
l'extraction par corrélation statistique à partir d'une base de données d'expérience d'une loi reliant la transformation instantanée de la composition et de la quantité du gaz naturel liquéfié à des conditions instantanées de navigation, à des caractéristiques du méthanier et à la nature du gaz naturel liquéfié initialement embarqué, la transformation instantanée de la composition et de la quantité du gaz naturel liquéfié étant dû à l'évaporation et à la formation de gaz évaporé, dans laquelle les conditions instantanées de navigation comprennent l'état de la mer, la vitesse du navire et un état de l'atmosphère,
la base de données d'expérience étant constituée au cours d'une phase (1000) utilisant une flotte de navires, ou un navire unique, chaque navire étant équipé de différents capteurs et enregistreurs pour mesurer la quantité et la nature des différents composants du gaz évaporé au cours de trajet du navire,
et
sélectionner une pluralité de trajets envisagés (410, 411, 412) pour le navire de transport,
intégrer, sur chaque trajet envisagé (410, 411, 412, 420 ; 510, 511, 512) depuis un point de référence (400, P ; 500) auquel lesdites caractéristiques sont connues (Qn, Qi) et jusqu'à un point d'estimation du trajet envisagé, la loi reliant la transformation instantanée de la composition et de la quantité du gaz naturel liquéfié aux conditions instantanées de navigation, l'intégration étant effectuée en fonction des conditions anticipées ou prévues de navigation le long du trajet envisagé à partir du point de référence jusqu'au point d'estimation, afin d'obtenir une estimation de la composition et de la quantité du gaz naturel liquéfié au point d'estimation du trajet envisagé,
sélectionner un trajet qui fournit une composition estimée optimale et / ou une plus grande quantité estimée de gaz naturel liquéfié parmi lesdits trajets envisagés.

2. Méthode selon la revendication 1, dans laquelle ledit point d'estimation est un point d'arrivée du navire à un terminal de livraison (401 ; 501,502, 503) ou un point du trajet envisagé auquel il est nécessaire de choisir entre au moins deux itinéraires (P).

3. Méthode selon la revendication 1 ou la revendication 2, dans laquelle l'intégration est effectuée sur la base de valeurs prédites des conditions instantanées de navigation.

4. Méthode selon l'une des revendications 1 à 3, dans laquelle le point de référence (400 ; 500) est un terminal de chargement du navire.

5. Méthode selon l'une des revendications 1 à 4, dans laquelle les caractéristiques du gaz transporté comprennent la température du gaz liquéfié, ou une proportion ou une quantité de gaz évaporé depuis le chargement.

6. Méthode selon l'une des revendications 1 à 6, dans laquelle la loi fournit en outre une quantité (Qn) et une composition (Q) du gaz évaporé.

7. Méthode selon l'une des revendications 1 à 6, dans laquelle la loi prend en compte des caractéristiques d'une cuve du navire, dans laquelle les caractéristiques sont sélectionnées dans un groupe consistant en une capacité de stockage et en un système d'isolation.

8. Méthode selon l'une des revendications 1 à 7, comprenant en outre une étape consistant à sélectionner une pluralité de destinations envisagées (501, 502, 503) et ladite pluralité de trajets envisagés conduisant respectivement à toutes lesdites destinations envisagées.

9. Méthode
selon l'une quelconque des revendications 1 à 8, comprenant en outre des étapes consistant à:
construire (1000) la base de données d'expérience en recueillant des valeurs de paramètres mesurés à des instants successifs dans le temps pendant un ou plusieurs voyages d'un ou plusieurs desdits navires de transport, lesdits capteurs et d'enregistreurs mesurant lesdits paramètres, lesdits paramètres mesurés comprenant une quantité de gaz évaporé dans le navire de transport, une composition du gaz évaporé dans le navire de transport, et de paramètres pouvant être sélectionnés parmi, une vitesse d'évaporation dans le navire de transport, un état de la mer, une hauteur de vagues, une période des vagues, une direction des vagues, une vitesse du navire de transport, et une température de la mer ou du vent.

10. Dispositif de traitement de données comprenant d'un ordinateur pour estimer des caractéristiques d'un chargement de gaz naturel liquéfié transporté ou destiné à être transporté par un navire de transport, les caractéristiques comprenant une composition de gaz naturel liquéfié et une quantité de gaz naturel liquéfié, le dispositif comprenant des moyens de caractérisation d'un état du gaz naturel liquéfié transporté ou destiné à être transporté par un navire, **caractérisé en ce que** les moyens de caractérisation sont configurés pour :
extraire par corrélation statistique à partir d'une base de données d'expérience d'une loi reliant la transformation instantanée de la composition et de la quantité du gaz naturel liquéfié à des conditions instantanées de navigation, à des caractéristiques du méthanier et à la nature du gaz naturel liquéfié initialement embarqué, la transformation instantanée de la composition et de la quantité du gaz naturel liquéfié étant dû à l'évaporation et à la formation de gaz évaporé, dans laquelle les conditions instantanées de navigation comprennent l'état de la mer, la vitesse du navire et un état de l'atmosphère,
la base de données d'expérience étant constituée au cours d'une phase (1000) utilisant une flotte de navires, ou un navire unique, chaque navire étant équipé de différents capteurs et enregistreurs pour mesurer la quantité et la nature des différents composants du gaz évaporé au cours de trajet du navire, et
sélectionner une pluralité de trajets envisagés (410, 411, 412) pour le navire de transport,
intégrer, sur chaque trajet envisagé (410, 411, 412, 420 ; 510, 511, 512) depuis un point de référence (400, P ; 500) auquel lesdites caractéristiques sont connues (Qn, Qi) et jusqu'à un point d'estimation du trajet envisagé, la loi reliant une transformation instantanée d'une composition de gaz naturel liquéfié et une quantité de gaz naturel liquéfié aux conditions instantanées de navigation, la transformation instantanée de la composition et de la quantité du gaz naturel liquéfié étant dû à l'évaporation de gaz, l'intégration étant effectuée en fonction des conditions anticipées ou prévues de navigation le long du trajet à partir du point de référence jusqu'au point d'estimation, afin d'obtenir une estimation de la composition et de la quantité du gaz naturel liquéfié au point d'estimation du trajet envisagé,
sélectionner un trajet qui fournit une composition estimée optimale et / ou une plus grande quantité estimée de gaz naturel liquéfié parmi lesdits trajets envisagés.

## Patentansprüche

1. Computerimplementiertes Verfahren zum Schätzen der Eigenschaften (Qn', Ql') einer Ladung von Flüssigerdgas, die von einem Transportschiff transportiert wird oder transportiert werden soll, wobei die Eigenschaften eine Zusammensetzung von Flüssigerdgas und eine Menge von Flüssigerdgas umfassen, **dadurch gekennzeichnet, dass** das Verfahren Folgendes umfasst:
Extrahieren, durch statistische Korrelation aus einer Erfahrungsdatenbank, eines Gesetzes, das die momentane Umwandlung der Zusammensetzung und der Menge des Flüssigerdgases mit den momentanen Navigationsbedingungen, den Eigenschaften des LNG-Tankers und der Art des ursprünglich an Bord befindlichen Flüssigerdgases in Verbindung bringt, wobei die momentane Umwandlung der Zusammensetzung und der Menge des Flüssigerdgases auf die Verdampfung und die Bildung von verdampftem Gas zurückzuführen ist, wobei die momentanen Navigationsbedingungen den Seegang, die Geschwindigkeit des Schiffs und einen atmosphärischen Zustand umfassen,
wobei die Erfahrungsdatenbank im Verlauf einer Phase (1000) unter Verwendung einer Flotte von Schiffen oder eines einzelnen Schiffs aufgebaut wird, wobei jedes Schiff mit verschiedenen Sensoren und Aufzeichnungsgeräten ausgerüstet ist, um die Menge und die Art der verschiedenen Bestandteile des verdampften Gases im Verlauf der Route des Schiffs zu messen,
und
Auswählen einer Vielzahl von geplanten Routen (410, 411, 412) für das Transportschiff,
Integrieren, auf jeder geplanten Route (410, 411, 412, 420; 510, 511, 512) ab einem Referenzpunkt (400, P; 500), an dem die Eigenschaften bekannt sind (Qn, Qi) und bis zu einem Schätzpunkt der geplanten Route, des Gesetzes, das die momentane Umwandlung der Zusammensetzung und der Menge des Flüssigerdgases mit den momentanen Navigationsbedingungen in Verbindung bringt, wobei die Integration basierend auf den erwarteten oder vorhergesagten Navigationsbedingungen entlang der geplanten Route ab dem Referenzpunkt bis zu dem Schätzpunkt erfolgt, um eine Schätzung der Zusammensetzung und der Menge des Flüssigerdgases an dem Schätzpunkt der geplanten Route zu erlangen,
Auswählen einer Route, die eine optimale geschätzte Zusammensetzung und/oder eine größere geschätzte Menge an Flüssigerdgas bereitstellt, aus den geplanten Routen.

2. Verfahren nach Anspruch 1, wobei der Schätzpunkt ein Ankunftspunkt des Schiffs an einem Lieferterminal (401; 501, 502, 503) oder ein Punkt auf der geplanten Route ist, an dem eine Auswahl zwischen mindestens zwei Strecken (P) erforderlich ist.

3. Verfahren nach Anspruch 1 oder 2, wobei die Integration basierend auf vorhergesagten Werten der momentanen Navigationsbedingungen erfolgt.

4. Verfahren nach einem der Ansprüche 1 bis 3, wobei der Referenzpunkt (400; 500) ein Ladeterminal des Schiffs ist.

5. Verfahren nach einem der Ansprüche 1 bis 4, wobei die Eigenschaften des transportierten Gases die Temperatur des Flüssiggases oder einen Anteil oder eine Menge des seit der Beladung verdampften Gases umfassen.

6. Verfahren nach einem der Ansprüche 1 bis 6, wobei das Gesetz ferner eine Menge (Qn) und eine Zusammensetzung (Q) des verdampften Gases bereitstellt.

7. Verfahren nach einem der Ansprüche 1 bis 6, wobei das Gesetz Eigenschaften eines Tanks des Schiffs berücksichtigt, wobei die Eigenschaften ausgewählt sind aus einer Gruppe, bestehend aus einer Speicherkapazität und einem Isolationssystem.

8. Verfahren nach einem der Ansprüche 1 bis 7, ferner umfassend einen Schritt eines Auswählens einer Vielzahl von geplanten Zielen (501, 502, 503) und der Vielzahl von geplanten Routen, die jeweils zu allen geplanten Zielen führen.

9. Verfahren nach einem der Ansprüche 1 bis 8, ferner umfassend Schritte, die aus Folgendem bestehen:
Aufbauen (1000) der Erfahrungsdatenbank durch Sammeln von Parameterwerten, die zu zeitlich aufeinanderfolgenden Zeitpunkten während einer oder mehrerer Fahrten eines oder mehrerer der Transportschiffe gemessen werden, wobei die Sensoren und Aufzeichnungsgeräte die Parameter messen, die gemessenen Parameter umfassen eine Menge des in dem Transportschiff verdampften Gases, eine Zusammensetzung des in dem Transportschiff verdampften Gases und Parameter, die ausgewählt werden können aus einer Verdampfungsgeschwindigkeit in dem Transportschiff, einem Seegang, einer Wellenhöhe, einer Wellenperiode, einer Wellenrichtung, einer Geschwindigkeit des Transportschiffs und einer See- oder Windtemperatur.

10. Datenverarbeitungsvorrichtung, umfassend einen Computer zum Schätzen der Eigenschaften einer Ladung von Flüssigerdgas, die von einem Transportschiff transportiert wird oder transportiert werden soll, die Eigenschaften umfassend eine Zusammensetzung von Flüssigerdgas und eine Menge von Flüssigerdgas, die Vorrichtung umfassend Einrichtungen zur Charakterisierung eines Zustands des Flüssigerdgases, das von einem Schiff transportiert wird oder transportiert werden soll, **dadurch gekennzeichnet, dass** die Einrichtungen zur Charakterisierung zu Folgendem konfiguriert sind:
Extrahieren, durch statistische Korrelation aus einer Erfahrungsdatenbank, eines Gesetzes, das die momentane Umwandlung der Zusammensetzung und der Menge des Flüssigerdgases mit den momentanen Navigationsbedingungen, den Eigenschaften des LNG-Tankers und der Art des ursprünglich an Bord befindlichen Flüssigerdgases in Verbindung bringt, wobei die momentane Umwandlung der Zusammensetzung und der Menge des Flüssigerdgases auf die Verdampfung und die Bildung von verdampftem Gas zurückzuführen ist, wobei die momentanen Navigationsbedingungen den Seegang, die Geschwindigkeit des Schiffs und einen atmosphärischen Zustand umfassen,
wobei die Erfahrungsdatenbank im Verlauf einer Phase (1000) unter Verwendung einer Flotte von Schiffen oder eines einzelnen Schiffs aufgebaut wird, wobei jedes Schiff mit verschiedenen Sensoren und Aufzeichnungsgeräten ausgerüstet ist, um die Menge und die Art der verschiedenen Bestandteile des verdampften Gases im Verlauf der Route des Schiffs zu messen, und
Auswählen einer Vielzahl von geplanten Routen (410, 411, 412) für das Transportschiff,
Integrieren, auf jeder geplanten Route (410, 411, 412, 420; 510, 511, 512) ab einem Referenzpunkt (400, P; 500), an dem die Eigenschaften bekannt sind (Qn, Qi) und bis zu einem Schätzpunkt der geplanten Route, des Gesetzes, das eine momentane Umwandlung einer Zusammensetzung von Flüssigerdgas und einer Menge von Flüssigerdgas mit den momentanen Navigationsbedingungen in Verbindung bringt, wobei die momentane Umwandlung der Zusammensetzung und des Menge des Flüssigerdgases auf die Verdampfung von Gas zurückzuführen ist, wobei die Integration basierend auf den erwarteten oder vorhergesagten Navigationsbedingungen entlang der Route ab dem Referenzpunkt bis zu dem Schätzpunkt erfolgt, um eine Schätzung der Zusammensetzung und der Menge des Flüssigerdgases an dem Schätzpunkt der geplanten Route zu erlangen,
Auswählen einer Route, die eine optimale geschätzte Zusammensetzung und/oder eine größere geschätzte Menge an Flüssigerdgas bereitstellt, aus den geplanten Routen.

## Claims

1. A computer-implemented method for estimating characteristics (Qn', QI') of a liquefied natural gas load carried or intended to be transported by a transport ship, wherein the characteristics include a liquefied natural gas composition and a quantity of liquefied natural gas, **characterized in that** the method comprises:
the extraction, using statistical correlation, from an experience database of a law linking the instantaneous transformation of the composition and quantity of liquefied natural gas to instantaneous navigational conditions, to characteristics of the LNG tanker and to the nature of the liquefied natural gas initially on board, the instantaneous transformation of the composition and of the quantity of liquefied natural gas being due to evaporation and formation of evaporated gas, wherein the instantaneous navigational conditions comprise the state of the sea, the ship speed and the atmospheric state,
the experience database being formed during a phase (1000) using a fleet of ships, or a single ship, each ship being equipped with different sensors and recorders to measure the quantity and the nature of the different components of the evaporated gas along the trip of the ship,
and
selecting a plurality of intended trips (410, 411, 412) for the transport ship,
integrating, over each envisaged trip (410, 411, 412, 420; 510, 511, 512) from a reference point (400, P; 500) at which said characteristics are known (Qn, Qi) and to an estimation point of the envisaged trip, the law relating the instantaneous transformation of the composition and of the quantity of the liquefied natural gas to the instantaneous navigation conditions, the integration being performed according to the anticipated or predicted navigation conditions along the envisaged trip from the reference point to the estimation point, in order to obtain an estimation of the composition and of the quantity of liquefied natural gas at the estimation point of the envisaged trip,
selecting a trip that provides an optimal estimated composition and/or a larger estimated quantity of liquefied natural gas from among said intended trips.

2. Method according to claim 1, wherein said estimation point is a point of arrival of the ship at a delivery terminal (401; 501, 502, 503) or a point on the envisaged trip at which it is necessary to choose between at least two itineraries (P).

3. Method according to claim 1 or claim 2, wherein the integration is performed based on predicted values of instantaneous navigation conditions.

4. Method according to one of claims 1 to 3, wherein the reference point (400; 500) is a loading terminal of the ship.

5. Method according to any of claims 1 to 4, wherein the characteristics of the transported gas comprise the temperature of the liquefied gas, or a proportion or amount of gas evaporated since the loading.

6. Method according to any of claims 1 to 6, wherein the law further provides an amount (Qn) and a composition (Q) of the evaporated gas.

7. Method according to any of claims 1 to 6, wherein the law takes into account features of a tank of the ship, wherein the features are selected from a group consisting of storage capacity and an isolation system.

8. Method according to one of claims 1 to 7, further comprising a step of selecting a plurality of intended destinations (501, 502, 503) and said plurality of intended trips leading to all of said intended destinations, respectively.

9. Method according to any of claims 1 to 8, further comprising steps consisting of:
building (1000) the experience database by collecting parameter values measured at successive instants in time during one or a plurality of voyages of one or a plurality of said transport ships, said sensors and recorders measuring said parameters, said measured parameters comprising an amount of gas evaporated in the transport ship, a composition of the gas evaporated in the transport ship, and parameters selectable from among a rate of evaporation in the transport ship, a state of the sea, a wave height, a wave period, a wave direction, a speed of the transport ship, and a temperature of the sea or of the wind.

10. A data processing device comprising a computer for estimating characteristics of a loading of liquefied natural gas transported or intended to be transported by a transport ship, the characteristics comprising a liquefied natural gas composition and a quantity of liquefied natural gas, the device comprising means for characterizing a state of the liquefied natural gas transported or intended to be transported by a ship, **characterized in that** the characterizing means are configured to:
extract, using a statistical correlation from an experience database, a law linking the instantaneous transformation of the composition and of the quantity of the liquefied natural gas at instantaneous navigation conditions, to characteristics of the LNG carrier and to the nature of the liquefied natural gas initially onboard, the instantaneous transformation of the composition and of the quantity of the liquefied natural gas being due to the evaporation and to the formation of evaporated gas, wherein the instantaneous navigation conditions comprise the state of the sea, the speed of the ship and the atmospheric conditions, the experience database being built in a phase (1000) using a fleet of ships, or a single ship, each ship being equipped with different sensors and recorders to measure the amount and nature of the different components of the evaporated gas during the trip of the ship, and
selecting a plurality of intended trips (410, 411, 412) for the transport ship,
integrating, over each envisaged trip (410, 411, 412, 420; 510, 511, 512) from a reference point (400, P; 500) at which said characteristics are known (Qn, Qi) to an estimation point of the envisaged trip, the law relating an instantaneous transformation of a composition of liquefied natural gas and an amount of liquefied natural gas to the instantaneous navigation conditions, the instantaneous transformation of the composition and of the quantity of liquefied natural gas being due to the evaporation of gas, the integration being performed according to the anticipated or predicted navigation conditions during the envisaged trip from the reference point to the estimation point, in order to obtain an estimation of the composition and of the quantity of liquefied natural gas at the estimation point of the envisaged trip,
selecting a trip that provides an optimal estimated composition and/or a larger estimated quantity of liquefied natural gas from among said intended trips.
